# EUROPEAN PATENT APPLICATION

(11) **EP 0 749 728 A1**
(43) Date of publication of application: **27.12.1996**
(21) Application number: 95830258.0
(22) Date of filing: 21.06.1995
(51) Int. Cl.: A61C 17/12

(54) **A command device for a filter console in dental aspiration groups**

(71) Applicant: CATTANI S.P.A., I-43100 Parma (IT)
(72) Inventor: Caleffi, Ideo, I-43038 Sala Baganza (Parma) (IT)
(74) Representative: Lanzoni, Luciano

(57) **Abstract**

The device, which is applied to consoles provided with suction tubes commanded by a pneumatic valve (4), comprises a solenoid valve (8) a mobile nucleus (12) whereof exhibits a sealing element (13) provided with two parallel sealing surfaces which are perpendicular to the axis of the nucleus; the sealing element is arranged internally of the filter console and, following activation of the solenoid valve (8) commands the pneumatic valve (4) to cause aspiration in the suction tube.

## Description

The invention relates to a command device for a filter console for aspiration groups used in dental surgeries.

Dentists' aspiration plants are provided with suction tubes which are used to aspirate blood, saliva, rinse water and other extraneous bodies and substances from a patient's mouth during an operation.

When not in use, the suction tubes are lodged in fork- or other type housings situated on a filter plant doubling as a console, to which same console the suction tubes are also connected by flexible tubes through which a depression is created at the suction tube mouth; the suction tube is also connected, by a further tube, to a suction pump which creates the necessary depression inside the console itself.

Devices such as pneumatic valves are usually comprised inside the console, and automatically remove the depression from a suction tube when it is placed on the rack; these pneumatic valves are normally commanded by a switch controlled by the suction tube itself, by means of pneumatic distributors or solenoid valves, according to the type of console being used.

In less recent consoles, the fork housing was fashioned directly in the body of the console; with these consoles the suction tube could act directly on both a switch actuating a solenoid valve and on a pneumatic distributor.

Consoles of this type are described, for example, in patents EP 0040181 and EP 0214105, both belonging to the present applicant. In more recent consoles, on the other hand, the rack support is arranged close to the operator while the console, being rather larger than in previous models, is housed internally of the plant; in these consoles the suction tube acts on a switch which, on an electrical command, actuates a solenoid valve provided in the body of the plant; obviously, it is much easier thus to transmit an electric command signal. In effect, then, all consoles in present use having the rack separate from the body of the console use solenoid valves commanded by an electric signal to command the pneumatic valves which stop aspiration.

Consoles of this kind are described, for example, in patent EP 0040181 and patent application EP 0638295, both belonging to the present applicant.

During aspiration, the aspirated fluid, whether gas or liquid, is sent through the tubes and invades the whole internal area of the console; both gases and liquids are corrosive and liable to form encrustations where they contact surfaces susceptible thereto.

A drawback found in known-type consoles is that the mobile nucleus of the solenoid valves which functions as an obturator is made of a ferromagnetic metal which is liable to attack from chemical agents, and therefore is liable to form encrustations or to corrode, consequently endangering the functionability of the entire device.

A further problem is that internally of the console wide-section conduits are necessary, both to avoid clogging and so that the device will respond more rapidly to commands given; all of the aforegoing notwithstanding the necessary inclusion of solenoid valves of acceptable dimensions and weights.

A further problem is how to avoid sibilant noises which can be at times caused by a continual passage of air from the external environment into the console.

The main aim of the present invention is to provide a device which permits of utilizing a solenoid valve and which at the same time solves all of the above-mentioned problems and drawbacks. An advantage of the invention is that it is simple and economical.

The above aims and advantages are all attained by the device in question, as it is characterized in the accompanying claims.

Further characteristics and advantages of the present invention will better emerge from the detailed description that follows, of an embodiment of the invention, illustrated in the form of a non-limiting example in the accompanying drawings, in which:

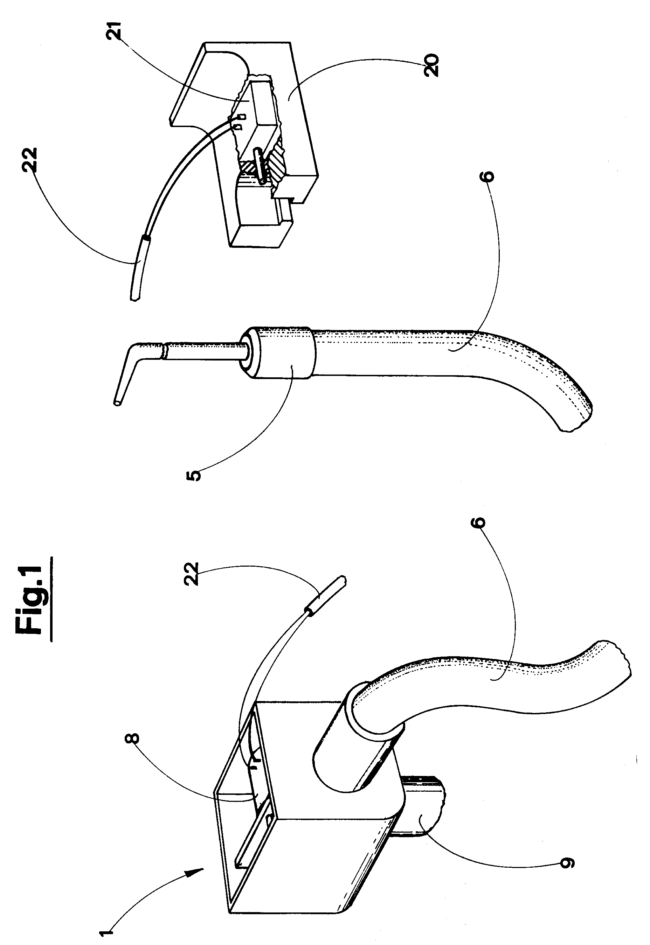

figure 1 is a general schematic view of a console and its support, equipped with the device of the invention;
figure 2 is a section according to line II-II of figure 4, of the console equipped with the device, with the pneumatic valve in the closed position;
figure 3 shows a section according to line II-II of figure 4 of the console equipped with the device, with the pneumatic valve in the open position;
figure 4 shows a section, according to line IV-IV of figure 2, of the console equipped with the device of the invention.

The console to which the command device of the invention is applied comprises a box 1 internally of which a collector 2 is provided, connected to a suction tube 5 by means of a first tube 6. The collector 2 is connected to a suction pipe 9 by means of a pneumatic valve 3 having a membrane 4 which closes and opens said connection according to whether the zones overlying and underlying the membrane are subject or not to a pressure differential.

The illustrated console is not provided with a seating for the suction tube, which seating is instead provided on a suction tube housing 20 situated in another zone of the suction plant; this both renders the housing 20 more accessible to the operator and the console smaller and more compact so that it can easily contain the plant.

In the illustrations a console with only one suction tube is shown, but with some modifications the above and the following can be equally applied to plants boasting a plurality of suction tubes.

The command device of the invention comprises a solenoid valve 8 activated by a switch 21 electrically connected to the solenoid valve 8 by a wire 22 provided on the support 20 and actuated by the suction tube 5; the function of the solenoid valve 8 is, as in the prior-art devices, that of permitting connection of the zone overlying the membrane 4 with the depression or with the external environment.

A chamber 10 is afforded in the box 1, which chamber 10 is connected to the zone overlying the membrane 4 by an aperture 10a. A first end 7a of a conduit 7 (a second end of which opens into the suction pipe 9) and a hole 11 connected with the outside environment both open into the chamber 10.

The solenoid valve 8 exhibits, at an end of its mobile nucleus 12, a sealing element 13 provided with two frontal parallel sealing surfaces and perpendicular to the axis of said nucleus 12; the sealing element 13 is cylindrical and is inserted coaxially into the external end of the nucleus.

The first sealing surface is represented by the external base to the nucleus of the element while the second sealing surface is a crown ring, in effect the part of the internal base of the element surrounding the nucleus itself.

While the mobile nucleus 12 is of necessity realized in ferromagnetic material and therefore is poorly resistant to corrosion by chemical agents, the sealing element 13 is made in a noncorrosive material, such as a plastic.

The mobile nucleus 12 of the solenoid valve 8 accesses the chamber 10 through the hole 11, which obviously has a greater diameter than the diameter of said nucleus 12. Thus the sealing element 13 is arranged inside the chamber 10 itself, and by actuating the solenoid valve 8 the sealing surfaces of the sealing element can act, as will be described in more detail hereinafter, in the following way: one on the end 7a and the other on the hole 11.

The functioning of the device will now be described, starting from the situation illustrated in figures from 1 to 3.

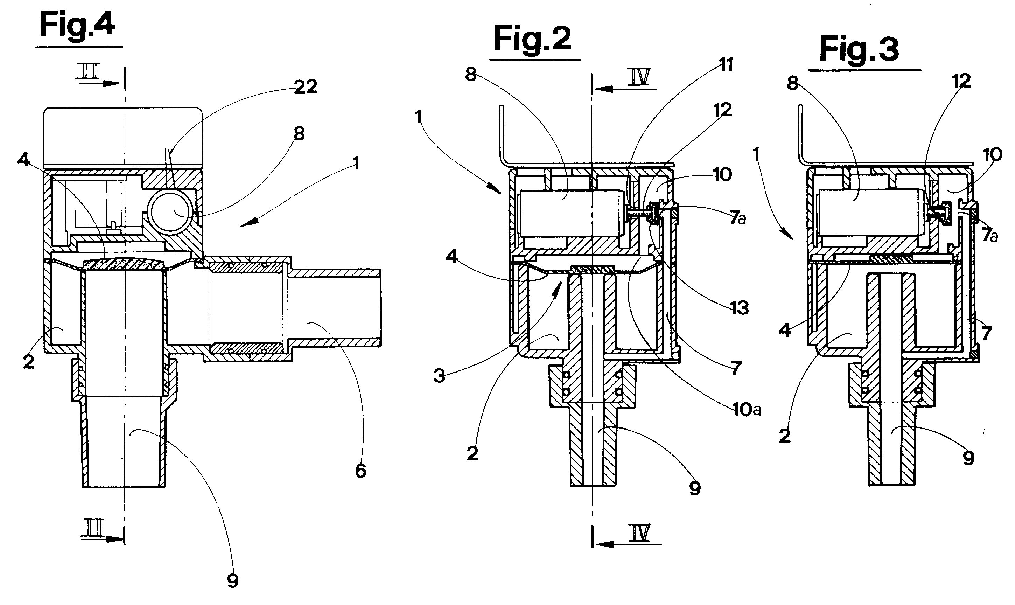

The suction tube 5 is detached from the support and is operative, providing suction; the sealing element 13 is in the position of figure 3, in which it closes the hole 11 and places the zone overlying the membrane 4 in communication with the suction pipe 9, through end 7a. In this situation, the zones overlying and underlying the membrane 4 are subjected to the same degree of pressure and the membrane 4 is therefore raised; the collector 2, connected to the suction tube 5, is thus connected to the aspiration, and the suction tube can aspirate.

When the suction tube 5 is rested on the housing, the switch 21 is actuated, and caused a change in the state of the solenoid valve 8, with a consequent displacement of the sealing element 13 into the position illustrated in figure 2; in this position the sealing element closes the end 7a and places the zone overlying the membrane 4 in communication with the outside environment. In this situation the zones overlying the membrane 4 and underlying same are subjected to a pressure differential and the membrane 4 is lowered on the suction pipe 9; the collector 2, connected to the suction pipe 9, is therefore not connected to the aspiration and the suction tube 5 cannot aspirate.

This situation continues up until when the suction pipe 5 is once more detached from the support, and the initial situation is re-established.

It is emphasized that the device illustrated in figures 2 and 3 can be utilized in its entirety not as a filter console but as a simple command device acting on a further filter console. In this case the first tube 6 of the device is connected to the suction tube of the further console and the device acts, exactly as above-described, to activate or interrupt aspiration to the other console.

The illustrated device achieves the set aim, which is to utilize a solenoid valve while avoiding incrustations on the valve itself. Further, use can be made of wide-section conduits; solenoid valves of good size and weight can be used, and irritating whistles caused by the continuous passage of air from the outside environment into the console are eliminated.

## Claims

1. A command device for a filter console for dental aspiration groups, applicable to a filter console comprising a box (1), internally of which a collector (2) is provided, connected to a suction tube (5) by means of a first tube (6), which is connected to a suction pipe (9) by means of a pneumatic valve (3) having a membrane (4) which opens or closes said connection according to whether zones overlying and underlying the membrane are subjected or not to a pressure differential; which command device comprises a solenoid valve (8) permitting connection of said overlying zone with a depression or with an external environment; characterized in that:
a chamber (10) is afforded in the box (1), which chamber (10) is in communication with the zone overlying the membrane (4); in which chamber (10) a first end (7a) of a conduit (7) opens, which second end opens into the suction tube (9); and a hole (11) is afforded, facing the first end (7a) and opening into the outside environment; the solenoid valve (8) exhibits at an end of a mobile nucleus (12) which is a constituent part thereof a sealing element (13) provided with two frontal parallel sealing surfaces perpendicular to an axis of said mobile nucleus (12); the mobile nucleus (12) of the solenoid valve (8) entering the chamber (10) through the hole (11), such that the sealing element (13) is arranged internally of the chamber (10); sealing surfaces of the sealing element (13) act, following the movement of the mobile nucleus, a first sealing surface by opening or closing the end (7a) and a second sealing element contemporaneously and alternatively closing or opening the hole (11).

2. A device as in claim 1, characterized in that the sealing element (13) is realized in a chemically non-corrosive material.

3. A solenoid valve for application to command devices for filter consoles in dental aspiration groups, characterized in that the mobile nucleus (12) exhibits, at one end thereof, a sealing element (13), realized in non-corrosive material, provided with two frontal parallel sealing surfaces which are perpendicular to an axis of said nucleus.
